# EUROPÄISCHE PATENTSCHRIFT

(11) **EP 2 433 151 B1**
(45) Veröffentlichungstag und Bekanntmachung des Hinweises auf die Patenterteilung: **25.11.2015**
(21) Anmeldenummer: 10716507.8
(22) Anmeldetag: 06.04.2010
(51) Int. Cl.: G01S 15/93, G01S 7/00, G01S 7/52

(54) **VERFAHREN ZUR AUSWAHL BESTIMMTER AKTIVITÄTEN EINER VIELZAHL VON SENSOREN, STEUERZENTRALE, SENSOR UND SENSORSYSTEM**
METHOD FOR SELECTING CERTAIN ACTIVITIES OF A PLURALITY OF SENSORS, CONTROL CENTER, SENSOR AND SENSOR SYSTEM
PROCÉDÉ POUR SÉLECTIONNER CERTAINES ACTIVITÉS D'UNE PLURALITÉ DE CAPTEURS, CENTRALE DE COMMANDE, CAPTEUR ET SYSTÈME CAPTEUR

(30) Priorität: 20.05.2009 DE 102009003282
(43) Veröffentlichungstag der Anmeldung: 28.03.2012
(73) Patentinhaber: Robert Bosch GmbH, 70442 Stuttgart (DE)
(72) Erfinder: HERING, Michael, 71229 Leonberg (DE); HELMLE, Michael, 73732 Esslingen (DE)
(86) Internationale Anmeldenummer: PCT/EP2010/054498
(87) Internationale Veröffentlichungsnummer: WO 2010/133397

(56) Entgegenhaltungen:
- DE-A1- 19 732 044
- US-A1- 2006 031 016
- US-A1- 2009 009 306

## Beschreibung

Die Erfindung betrifft ein Verfahren zur Auswahl bestimmter Aktivitäten einer Vielzahl von Sensoren. Weiterhin betrifft die Erfindung eine Steuerzentrale für eine Vielzahl von Sensoren, einen Sensor, sowie ein Sensorsystem mit einer Steuerzentrale und einer Vielzahl daran angeschlossener Sensoren.

### Stand der Technik

Die immer weiter schreitende Vernetzung hat dazu geführt, dass auch immer größere Sensornetzwerke gebaut werden, in denen eine Vielzahl von Sensoren ihre Messwerte an eine Steuerzentrale melden.

Als konkretes Beispiel wird hier ein Ultraschallerfassungssystem für ein Fahrzeug genannt, bei dem eine Vielzahl von Sensoren, den Bereich vor oder hinter dem Fahrzeug abtasten. Um ein möglichst korrektes "Schallabbild" der Umwelt zu erhalten, werden die Sensoren in verschiedener Abfolge oder in verschiedener Kombination angesteuert, das heißt während zum Beispiel ein Teil der Sensoren einen Ultraschallimpuls abgeben, empfängt ein anderer Teil das reflektierte Echo. Die Sensoren werden dazu von einer Steuerzentrale entsprechend angesteuert. Die Summe der von den Sensoren zu einem Zeitpunkt ausgeführten Aktivitäten (also z.B. Senden oder Empfang) kann dabei als Aktivierungsmuster aufgefasst werden. Ein solches System ist beispielsweise aus der DE 10 2004 032 262 A1 bekannt.

Da die Aktivierungsmuster mitunter sehr rasch wechseln und die Sensoren dazu jeweils neu angesteuert werden müssen, ist eine Kommunikationsverbindung (z.B. verdrahteter Stern, verdrahteter Bus, Funkverbindung, etc.) zwischen den Sensoren und der Steuerzentrale nötig, welche die dazu erforderliche Datenmenge auch bewältigen kann. Schließlich werden nicht nur Steuerbefehle an die Sensoren sondern auch Messergebnisse von den Sensoren über die genannte Kommunikationsverbindung übermittelt.

Die DE 100 48 808 A1 offenbart ein Verfahren und eine Vorrichtung zur Steuerung von Betriebsabläufen, insbesondere bei einem Fahrzeug, wobei wenigstens ein Sensor mit einer Verbindungseinheit über ein Bussystem mit wenigstens einer Steuereinheit zur Steuerung der Betriebsabläufe, welche ebenfalls eine Verbindungseinheit aufweist, verbunden ist und Sensorinformation zu Steuereinheit übertragen werden. Dabei liest die Steuereinheit die Sensorinformationen zu vorgebbaren Synchronisationspunkten ein und/oder verarbeitet die se. Es wird ein Triggersignal durch die Steuereinheit über das Bussystem an den Sensor derart mit einem Vorhalt übermittelt, dass die Sensorinformationen exakt zum Synchronisationszeitpunkt für die Steuereinheit einlesbar und/oder verarbeitbar vorliegen.

Die US 2009 000 93 06 A1 beschreibt eine Vorrichtung zur Steuerung eines Ultraschallsensors. Eine Steuereinrichtung kontrolliert dabei die Auswahl der Betriebsmodi eines jeden Ultraschallsensors. Verschiedene Befehle wie Betriebsmodusänderungsbefehl, Sendebefehl, Abfragebefehl und weitere Befehle werden mittels Steuereinrichtung über die serielle Schnittstelle gesendet.

Das Dokument D2 (DE 19732044 A1) beschreibt eine Abstandsmessvorrichtung für ein Kraftfahrzeug zur Detektion von Objekten und zur Bestimmung von Meßgrößen detektierter Objekte.

Wünschenswert ist es nun, ein verbessertes Verfahren zur Auswahl bestimmter Aktivitäten in einer Vielzahl von Sensoren, eine verbesserte Steuerzentrale, einen verbesserten Sensor und ein verbessertes Sensorsystem anzugeben.

### Offenbarung der Erfindung

Die Erfindung schafft ein Verfahren nach Anspruch 1, eine Steuerzentrale nach Anspruch 4, einem Sensor nach Anspruch 5 und einem Sensorsystem nach Anspruch 6.

Demgemäß ist ein Verfahren zur Auswahl bestimmter Aktivitäten einer Vielzahl von Sensoren vorgesehen, umfassend die Schritte:
- Senden einer ersten Aktivitätenliste an einen ersten Sensor und zumindest einer zweiten Aktivitätenliste an zumindest einen zweiten Sensor in einem Initialisierungsschritt und
- Senden eines Auswahlbefehls an den ersten und den zumindest zweiten Sensor, wobei der Auswahlbefehl die Ausführung einer aus der ersten Aktivitätenliste ausgewählten ersten Aktivität im ersten Sensor und einer aus der zumindest zweiten Aktivitätenliste aus-gewählten zweiten Aktivität im zumindest zweiten Sensor bewirkt.

Demgemäß ist darüber hinaus eine Steuerzentrale zur Ansteuerung einer Vielzahl von Sensoren vorgesehen, umfassend eine Schnittstelle zum Senden einer ersten Aktivitätenliste an einen ersten Sensor und zumindest einer zweiten Aktivitätenliste an zumindest einen zweiten Sensor in einem Initialisierungsschritt, sowie zum Senden eines Auswahlbefehls an den ers ten und den zumindest zweiten Sensor, wobei der Auswahlbefehl die Ausführung einer aus der ersten Aktivitätenliste ausgewählten ersten Aktivität im ersten Sensor und einer aus der zumindest zweiten Aktivitätenliste ausgewählten zweiten Aktivität im zumindest zweiten Sensor bewirkt.

Weiterhin ist demgemäß ein Sensor vorgesehen, umfassend:
- eine Schnittstelle zum Empfangen einer Aktivitätenliste und eines Auswahlbefehls,
- einen Speicher zum Speichern der Aktivitätenliste und
- Mittel zum Ausführen einer mit einem empfangenen Auswahlbefehl aus der Aktivitätenliste ausgewählten Aktivität.

Schließlich ist demgemäß ein Sensorsystem mit einer erfindungsgemäßen Steuerzentrale und einer Vielzahl daran angeschlossener, erfindungsgemäßer Sensoren vorgesehen.

Die vorliegende Erfindung ermöglicht damit, in einem Initialisierungsschritt Aktivitätenlisten an die Sensoren zu senden, bestimmte Aktivierungsmuster also vorab zu definieren und in den Sensoren zu speichern. Durch Senden eines vergleichsweise kurzen Auswahlbefehls an die Sensoren kann dann ein beliebiges, vorab definiertes Aktivierungsmuster aktiviert werden. Die erforderliche Datenrate für eine Datenverbindung zwischen Steuerzentrale und Sensoren kann daher deutlich reduziert werden. Daher kann beispielsweise eine einfachere Datenübertragungstechnologie verwendet oder bei gleicher Technologie die Messfrequenz erhöht werden. Darüber hinaus wird die zeitliche Synchronisierung einer Vielzahl von Sensoren erleichtert.

Unter einer "Sensor" ist im Rahmen der Erfindung jedes Element zu verstehen, das zur Erfassung einer physikalischen Größe geeignet ist. Dies schließt nicht aus, dass ein Sensor auch aktiv eine physikalische Größe beeinflussen kann, insbesondere um die Erfassung der Messgröße zu ermöglichen oder zu erleichtern. Beispielsweise sendet ein Ultraschallsensor aktiv ein Signal aus und ermittelt aus dem empfangenen Echo die eigentliche Messgröße, nämlich den Abstand zu einem Objekt.

Unter einer "Aktivität" ist im Rahmen der Erfindung jeder Zustand des Sensors zu verstehen, insbesondere auch ein Ruhe- oder "Idle"-Zustand. Die Aktivität kann dabei auch zusätzliche, insbesondere für den Zustand nötige, Parameter enthalten.

Unter einer "Aktivitätenliste" ist im Rahmen der Erfindung schließlich jede Anhäufung mehrerer, sowohl gleicher als auch unterschiedlicher, Aktivitäten zu verstehen.

Vorteilhafte Ausgestaltungen und Weiterbildungen der Erfindung ergeben sich aus den Unteransprüchen sowie aus der Beschreibung in Zusammenschau mit den Figuren der Zeichnung.

Günstig ist es, wenn das Senden des Auswahlbefehls, beziehungsweise das Empfangen des Auswahlbefehls und die Ausführung der damit ausgewählten Aktivität wiederkehrend erfolgt. Wenn zu einem Initialisierungsschritt eine Vielzahl von Auswahlbefehlen folgt, tritt der Wert der Erfindung besonders hervor, da sich die Datenmenge für die Übertragung der Aktivierungslisten in Relation zur gesamt übertragenen Datenmenge stark reduziert.

Vorteilhaft ist es, wenn jeder Aktivität in der Aktivitätenliste ein bestimmter Auswahlbefehl zugeordnet ist. Auf diese Weise kann auf vergleichsweise einfache Weise definiert werden, welche Aktivität welcher Sensor bei einem bestimmten Auswahlbefehl ausführt. Die konkrete Anordnung von Aktivitäten und Auswahlbefehlen im Speicher kann dabei flexibel erfolgen.

Besonders vorteilhaft ist es, wenn jede Aktivität in der Aktivitätenliste einen bestimmten Index aufweist und der Auswahlbefehl diesen Index enthält oder aus diesem besteht. Auf diese Weise kann der Speicherbedarf und gegebenenfalls die zu übertragende Datenmenge weiter reduziert werden, da der Index implizit gegeben ist und nicht explizit angegeben werden muss. Im Extremfall braucht nur ein bestimmter Index, also im Prinzip eine Ganzzahl (Integer) übertragen werden. Bei vier Sensoren sind das lediglich zwei Bit.

Die für die Verfahren angesprochenen Varianten sowie die sich daraus ergebenden Effekte und Vorteile beziehen sich gleichermaßen auf eine erfindungsgemäße Steuerzentrale, auf einen erfindungsgemäßen Sensor und ein erfindungsgemäßes Sensorsystem beziehen.

### Kurze Beschreibung der Zeichnungen

Die vorliegende Erfindung wird nachfolgend anhand der in den schematischen Figuren der Zeichnung angegebenen Ausführungsbeispiele näher erläutert. Es zeigen dabei:
Figur 1 schematisch ein Sensorsystem mit einer Steuerzentrale und einer Vielzahl daran angeschlossener Sensoren;
Figur 2 den Aufbau des Speichers der Sensoren in einer ersten Ausführungsform;
Figur 3 den Aufbau des Speichers der Sensoren in einer zweiten Ausführungsform.

### Ausführungsformen der Erfindung

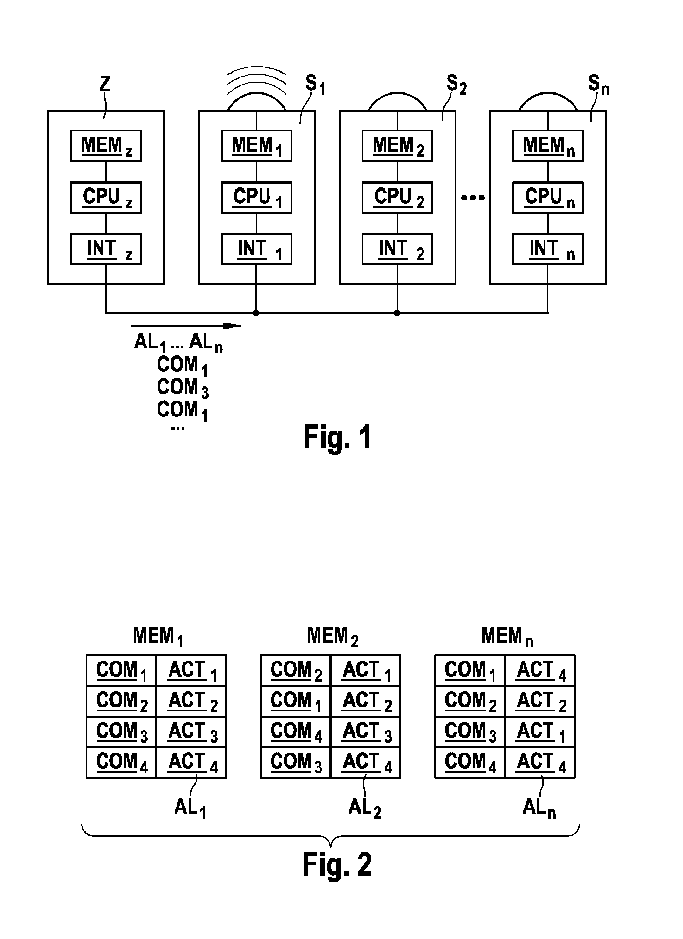

Die Figur 1 zeigt schematisch ein Sensorsystem bestehend aus einer Steuerzentrale Z und einer Vielzahl daran angeschlossener Sensoren S₁..Sₙ. Im gezeigten Beispiel sind die Sensoren S₁..Sₙ über ein Bussystem mit der Steuerzentrale Z verbunden. Alternativ ist z. B. auch eine Sternstruktur sowie eine Anbindung der Sensoren S₁..Sₙ an die Steuerzentrale Z über eine Funkschnittstelle denkbar.

Die Steuerzentrale Z umfasst eine Datenschnittstelle INT_{Z} zur Anbindung der Steuerzentrale Z an den Bus, eine mit der Datenschnittstelle INT_{Z} verbundene zentrale Recheneinheit CPU_{Z}, sowie einen mit der zentralen Recheneinheit CPU_{Z} verbundenen Speicher MEM_{Z}.

Während in der Fig. 1 die Funktion der Steuerzentrale Z in Form eines Softwareprogramms abgebildet ist, welches im Speicher MEM_{Z} abgelegt ist und von der zentralen Recheneinheit CPU_{Z} abgearbeitet wird, ist auch eine Ausführung in Hardware oder eine gemischte Ausführung in Soft- und Hardware möglich. Darüber hinaus ist denkbar, dass die Steuerzentrale Z mit einer nicht dargestellten, übergeordneten Steuerung zusammenarbeitet, welche beispielsweise durch einen Bordcomputer eines Fahrzeugs gebildet wird. Schließlich ist auch vorstellbar, dass die Steuerzentrale Z ein Teil einer größeren Steuerung ist, etwa in Form einer in dieser Steuerung ablaufenden Software-Routine und/oder in Form eines Teilbereichs der elektronischen Schaltung der Steuerung. Als größere Steuerung kommt beispielsweise der bereits angesprochene Bordcomputer in Betracht.

Die Sensoren S₁..Sₙ umfassen jeweils eine Datenschnittstelle INT₁..INTₙ zur Anbindung der Sensoren S₁..Sₙ an den Bus, eine mit der Datenschnittstelle INT₁..INTₙ verbundene zentrale Recheneinheit CPU₁..CPUₙ, sowie einen mit der zentralen Recheneinheit CPU₁..CPUₙ verbundenen Speicher MEM₁..MEMₙ. Darüber hinaus umfassen die Sensoren S₁..Sₙ ein nicht näher bezeichnetes Sensorelement, also ein Bauteil, das die eigentliche physikalische Größe misst. Im gezeigten Beispiel ist dieses Sensorelement mit einer kuppelförmigen Ausbuchtung am Sensor S₁..Sₙ symbolisiert. Beispielsweise ist dies ein Ultraschallsender/-empfänger zur Entfernungsmessung. In der Fig. 1 ist dieses Sensorelement mit dem Speicher MEM₁..MEMₙ verbunden. Beispielsweise können die Elemente des Sensors S₁..Sₙ über eine Busstruktur oder auch über eine von der zentralen Recheneinheit CPU₁..CPUₙ ausgehende Sternstruktur verbunden sein.

Beispielsweise kann auch die Funktion des Sensors S₁..Sₙ in Soft- und/oder Hardware, sowie teilweise in einer übergeordneten Software/Schaltung abgebildet sein. Im Extremfall besteht der Sensor S₁..Sₙ nunmehr aus dem eigentlichen Sensorelement.

Je nach Ausführungsform können sich die funktionalen/physikalischen Grenzen der dargestellten Einheiten verschieben.

Es wird darauf hingewiesen, dass die in dem Anspruch für den Sensor genannten Mittel zum Ausführen einer Aktivität ACT₁..ACT₄ nicht notwendigerweise den Aktuator selbst, also zum Beispiel eine Sende-/Empfangseinheit, umfassen. Im Rahmen der Erfindung wird unter diesen Mitteln auch beispielsweise ein Signal oder ein dieses Signal führender Anschluss verstanden, welches oder welcher die entsprechende Aktivität ACT₁..ACTₙ bewirkt.

Schließlich zeigt die Fig. 1 welche Daten von der Steuerzentrale Z an die Sensoren S₁..Sₙ geschickt werden. In einem Initialisierungsschritt werden die Aktivitätenlisten AL₁..ALₙ an die einzelnen Sensoren S₁..Sₙ gesendet. Dies kann beispielsweise in einem einzigen Kommando für alle Sensoren S₁..Sₙ gemeinsam geschehen oder aber auch sequentiell in je einem Kommando für je einen Sensor S₁..Sₙ. Nach dem Initialisierungsschritt werden die für die eigentliche Funktion des Sensorsystems, also das Messen von physikalischen Größen, nötigen Auswahlbefehle COM₁..COM₄ ausgesendet. Diese können in beliebiger Abfolge, auch mit Wiederholungen einzelner Auswahlbefehle COM₁..COM₄, erfolgen. An dieser Stelle wird angemerkt, dass die Antworten der Sensoren S₁..Sₙ (z.B. erfasste Messwerte) auf die einzelnen Auswahlbefehle COM₁..COM₄ der besseren Übersicht halber nicht dargestellt sind. Der Initialisierungsschritt kann selbstverständlich, auch mit verschiedenen Aktivitätenlisten AL₁..ALₙ, beliebig oft wiederholt werden.

Vorteilhaft an dieser Vorgangsweise ist, dass die relativ umfangreichen Aktivitätenlisten AL₁..ALₙ nur einmal (oder zumindest selten) gesendet werden und die Auswahlbefehle COM₁..COM₄ zur Ausführung einer aus der Aktivitätenlisten AL₁..ALₙ ausgewählten Aktivität ACT₁..ACT₄ relativ kurz sind. Aus diesem Grund kann die Messfrequenz gesteigert werden oder es kann bei gleicher Messfrequenz eine langsamere und damit technisch einfachere Übertragungstechnologie genutzt werden.

Fig. 2 zeigt nun den Aufbau des Speichers MEM₁..MEMₙ der Sensoren S₁..Sₙ in einer ersten Ausführungsform. Dabei ist jedem Auswahlbefehl COM₁..COM₄ eine bestimmte Aktivität ACT₁..ACT₄ zugeordnet. Die Summe der Aktivitäten ACT₁..ACT₄ bildet dabei jeweils die Aktivitätenliste AL₁..ALₙ eines Sensors S₁..Sₙ. Die Fig. 2 zeigt deutlich, dass die genannte Zuordnung völlig frei ist, beispielsweise können Auswahlbefehle COM₁..COM₄ und Aktivitäten ACT₁..ACT₄ wie im ersten Speicher MEM₁ sortiert vorliegen, auch können nur die Aktivitäten ACT₁..ACT₄ (zweiter Speicher MEM₂) oder nur die Auswahlbefehle COM₁..COM₄ (dritter Speicher MEM₃) sortiert vorliegen. Schließlich ist auch eine völlig unsortierte Anordnung der Elemente denkbar. Möglich ist natürlich auch, dass bestimmte Aktivitäten ACT₁..ACT₄ innerhalb eines Sensors S₁..Sₙ mehreren Auswahlbefehlen COM₁..COM₄ zugeordnet sind (z.B. ACT₄ in ALₙ). Darüber hinaus ist natürlich auch vorstellbar, dass die einzelnen Sensoren S₁..Sₙ unterschiedlichen Funktionsumfang haben. Daher kann etwa im zweiten Speicher MEM₂ eine fünfte Aktivität (nicht dargestellt) vorkommen, die in keinem anderen Speicher MEM₁, MEMₙ enthalten ist. Als Aktivität ACT₁..ACT₄ kommt natürlich auch das Verharren in einem Ruhezustand in Betracht (sogenannter "Idle-State"). Wird von der Steuerzentrale Z nun der erste Auswahlbefehl COM₁ ausgesendet, so führt der erste Sensor S₁ die erste Aktivität ACT₁, der zweite Sensor S₂ ebenfalls die erste Aktivität ACT₁ und der n-te Sensor Sₙ die vierte Aktivität ACT₄ aus.

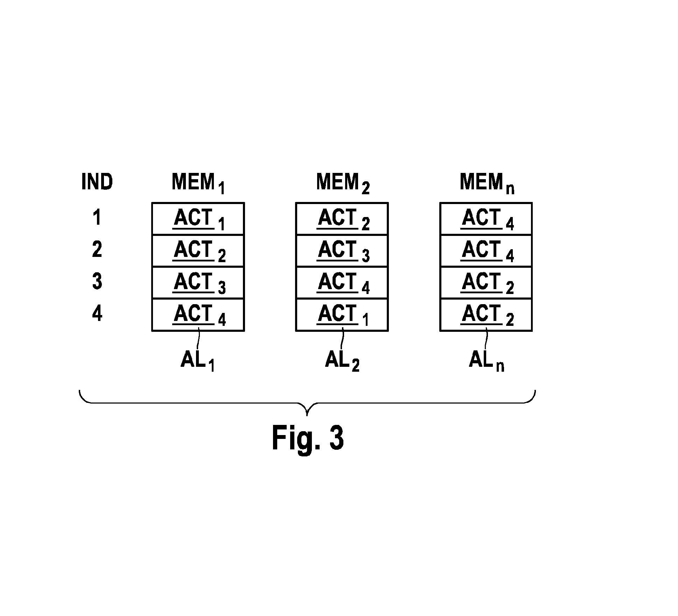

Fig. 3 zeigt nun den Aufbau des Speichers MEM₁..MEMₙ der Sensoren S₁..Sₙ in einer zweiten Ausführungsform. Der Speicher MEM₁..MEMₙ enthält dabei keine Zuordnung einer Aktivität ACT₁..ACT₄ zu einem bestimmten Auswahlbefehl COM₁..COM₄, sondern die Auswahl erfolgt über den Index IND, also die Position einer Aktivität ACT₁..ACT₄ innerhalb einer Aktivitätenliste AL₁..ALₙ. Vorteilhaft an dieser Vorgangsweise ist, dass Speicherplatz eingespart werden kann. Die Auswahl einer Aktivität ACT₁..ACT₄ durch die Steuerzentrale Z erfolgt dabei durch Angabe des gewünschten Index IND, also der gewünschten Zeile. Wird der Index IND=3 angegeben, so führt der erste Sensor S₁ die dritte Aktivität ACT₃, der zweite Sensor S₂ die vierte Aktivität ACT₄ und der n-te Sensor Sn die zweite Aktivität ACT₂ aus. Wie ersichtlich ist, kann auch der Auswahlbefehl COM₁..COM₄ sehr kurz gestaltet werden und z.B. nur aus einer Ganzzahl bestehen.

Die Funktion des erfindungsgemäßen Verfahrens, beziehungsweise der erfindungsgemäßen Vorrichtung wird nun anhand eines konkreten Ausführungsbeispiels erläutert. Das Sensorsystem soll dabei in einem Fahrzeug eingebaut sein und den vor dem Fahrzeug liegenden Bereich auf gefährliche Objekte hin abtasten. Für die Sensoren S₁..Sₙ werden dabei Ultraschallsensoren vorgesehen. Selbstverständlich sind auch andere Sensoren vorstellbar, beispielsweise Laser-Abstandssensoren. Als erste Aktivität ACT, wird "Signal aussenden", als zweite Aktivität ACT₂ "Echo empfangen", als dritte Aktivität ACT₃ "gleichzeitig Signal aussenden und Echo empfangen" und als vierte Aktivität ACT₄ "Ruhezustand" vorgesehen. Durch entsprechenden Aufbau der Aktivitätenlisten AL₁..ALₙ kann nun bewirkt werden, dass zum Beispiel der erste Sensor S₁ ein Signal aussendet (ACT₁) während alle anderen ein Echo empfangen (ACT₂). Für vier Sensoren S₁..Sₙ würde die erste Zeile daher "ACT₁, ACT₂, ACT₂, ACT₂" lauten. Soll dagegen der zweite und der vierte Sensor S2, Sn in den Ruhezustand versetzt werden, so würde die Zeile "ACT₁, ACT₄, ACT₂, ACT₄" lauten. Auf diese Weise können beliebige Aktivierungsmuster für die Sensoren S₁..Sₙ vordefiniert und mit einem einzelnen Auswahlbefehl COM₁..COM₄ abgerufen werden. Das System erweist sich somit als reaktionsschnell, beziehungsweise kommt mit einfachen (d.h. langsamen) Datenübertragungstechnologien aus. Aus diesem Grund eignet sich das System insbesondere für zeitkritische Anwendungen, beispielsweise für Fahrerassistenzsysteme.

Zu den jeweiligen Aktivitäten ACT₁..ACT₄ können (in den Figuren nicht dargestellte) Parameter abgespeichert sein. Beispielsweise kann zur Aktivität "Signal aussenden" auch eine bestimmte Signalstärke oder Erfassungsweite abgespeichert sein. Unterschiedliche Signalstärken oder Erfassungsweiten können aber auch als unterschiedliche Aktivitäten ACT₁..ACT₄ aufgefasst werden.

Auch wenn die Erfindung anhand eines Abstandsmeßsystems für ein Fahrzeug erläutert wurde, ist auch eine Verwendung insbesondere bei anderen Messungen mit mehreren Sensoren möglich. Beispielsweise kommen auch Anwendungen in der Gebäudetechnik oder in der Prozesstechnik in Betracht. Etwa können die Sensoren zur Temperaturmessung, Lichtmessung, Druckmessung, Strom- oder Spannungsmessung, usw. vorgesehen sein.

## Patentansprüche

1. Verfahren zur Auswahl bestimmter Aktivitäten (ACT1..ACT4) einer Vielzahl von Sensoren (S1..Sn), umfassend die Schritte:
Senden einer ersten Aktivitätenliste (AL1) an einen ersten Sensor (S1) und zumindest einer zweiten Aktivitätenliste (AL2) an zumindest einen zweiten Sensor (S2) in einem Initialisierungsschritt,
**dadurch gekennzeichnet, dass**
das Senden eines Auswahlbefehls (COM1..COM4) an den ersten und den zumindest zweiten Sensor (S1, S2), wobei der Auswahlbefehl (COM1..COM4) die Ausführung einer aus der ersten Aktivitätenliste (AL1) ausgewählten ersten Aktivität (ACT1..ACT4) im ersten Sensor (S1) und einer aus der zumindest zweiten Aktivitätenliste (AL2) ausgewählten zweiten Aktivität (ACT1..ACT4) im zumindest zweiten Sensor (S2) bewirkt.

2. Verfahren nach Anspruch 1, **dadurch gekennzeichnet, dass** jeder Aktivität (ACT1..ACT4) in der Aktivitätenliste (AL1..ALn) ein bestimmter Auswahlbefehl (COM1..COM4) zugeordnet ist.

3. Verfahren nach einem der Ansprüche 1 oder 2, **dadurch gekennzeichnet, dass** jede Aktivität (ACT1..ACT4) in der Aktivitätenliste (AL1..ALn) einen bestimmten Index (IND) zur Identifizierung einer Aktivität aufweist und der Auswahlbefehl (COM1..COM4) diesen Index (IND) enthält oder aus diesem besteht.

4. Steuerzentrale (Z) zur Ansteuerung einer Vielzahl von Sensoren (S1..Sn), umfassend eine Schnittstelle (INTZ) zum Senden einer ersten Aktivitätenliste (AL1) an einen ersten Sensor 25 (S1) und zumindest einer zweiten Aktivitätenliste (AL2) an zumindest einen zweiten Sensor (S2) in einem Initialisierungsschritt,
**dadurch gekennzeichnet, dass**
zum Senden eines Auswahlbefehls (COM1..COM4) an den ersten und den zumindest zweiten Sensor (S1, S2), wobei der Auswahlbefehl (COM1..COM4) die Ausführung einer aus der ersten Aktivitätenliste (AL1) ausgewählten ersten Aktivität (ACT1..ACT4) im ersten Sensor (S1) und einer aus der zumindest zweiten Aktivitätenliste (AL2) ausgewählten zweiten Aktivität (ACT1..ACT4) im zumindest zweiten Sensor (S2) bewirkt.

5. Sensor (S1..Sn), umfassend eine Schnittstelle (INT1..INTn) zum Empfangen einer Aktivitätenliste (AL1..ALn), wobei die Schnittstelle (INT1..INTn) die Sensoren (S1..Sn) an ein Bussystem anschliesst, und eines Auswahlbefehls (COM1..COM4), einen Speicher (MEM1..MEMn) zum Speichern der Aktivitätenliste (AL1..ALn),
**dadurch gekennzeichnet, dass**
ein Mittel zum Ausführen einer mit einem empfangenen Auswahlbefehl (COM1..COM4) aus der Aktivitätenliste (AL1..ALn) ausgewählten Aktivität (ACT1..ACT4) vorhanden ist.

6. Sensorsystem umfassend eine Steuerzentrale (Z) nach Anspruch 4 und eine Vielzahl daran angeschlossener Sensoren (S1...Sn) nach Anspruch 5.

## Claims

1. Method for selecting certain activities (ACT1..ACT4) of a multiplicity of sensors (S1..Sn), comprising the steps of:
transmitting a first list of activities (AL1) to a first sensor (S1) and at least one second list of activities (AL2) to at least one second sensor (S2) in an initialization step,
**characterized in that**
the transmission of a selection command (COM1..COM4) to the first sensor (S1) and to the at least second sensor (S2), the selection command (COM1..COM4) causing the performance of a first activity (ACT1..ACT4) selected from the first list of activities (AL1) in the first sensor (S1) and causing the performance of a second activity (ACT1..ACT4) selected from the at least second list of activities (AL2) in the at least second sensor (S2).

2. Method according to Claim 1, **characterized in that** a particular selection command (COM1..COM4) is assigned to each activity (ACT1..ACT4) in the list of activities (AL1..ALn).

3. Method according to either of Claims 1 and 2, **characterized in that** each activity (ACT1..ACT4) in the list of activities (AL1..ALn) has a particular index (IND) for identifying an activity and the selection command (COM1..COM4) contains this index (IND) or consists of the latter.

4. Control centre (Z) for controlling a multiplicity of sensors (S1..Sn), comprising an interface (INTZ) for transmitting a first list of activities (AL1) to a first sensor (S1) and at least one second list of activities (AL2) to at least one second sensor (S2) in an initialization step,
**characterized in that**
for the transmission of a selection command (COM1..COM4) to the first sensor (S1) and to the at least second sensor (S2), the selection command (COM1..COM4) causing the performance of a first activity (ACT1..ACT4) selected from the first list of activities (AL1) in the first sensor (S1) and causing the performance of a second activity (ACT1..ACT4) selected from the at least second list of activities (AL2) in the at least second sensor (S2).

5. Sensor (S1..Sn) comprising an interface (INT1..INTn) for receiving a list of activities (AL1..ALn), the interface (INT1..INTn) connecting the sensors (S1..Sn) to a bus system, and for receiving a selection command (COM1..COM4), and comprising a memory (MEM1..MEMn) for storing the list of activities (AL1..ALn),
**characterized in that**
there is a means for performing an activity (ACT1..ACT4) selected from the list of activities (AL1..ALn) using a received selection command (COM1..COM4).

6. Sensor system comprising a control centre (Z) according to Claim 4 and a multiplicity of sensors (S1..Sn) according to Claim 5 which are connected thereto.

## Revendications

1. Procédé de sélection d'activité déterminée (ACT1..ACT4) d'une pluralité de capteurs (S1..Sn), comprenant les étapes consistant à :
envoyer une première liste d'activités (AL1) à un premier capteur (S1) et au moins une seconde liste d'activités (AL2) à au moins un second capteur (S2) lors d'une étape d'initialisation,
**caractérisé en ce que** l'envoi d'une commande de sélection (COM1..COM4) au premier et à l'au moins un second capteur (S1, S2), dans lequel la commande de sélection (COM1..COM4) provoque l'exécution d'une première activité (ACT1..ACT4) sélectionnée à partir de la première liste d'activités (AL1) dans le premier capteur (S1) et d'une seconde activité (ACT1..ACT4) sélectionnée à partir de l'au moins seconde liste d'activités (AL2) dans l'au moins un second capteur (S2).

2. Procédé selon la revendication 1, **caractérisé en ce que** chaque activité (ACT1..ACT4) indiquée dans la liste d'activités (AL1..ALn) est associée à une commande de sélection déterminée (COM1..COM4).

3. Procédé selon l'une quelconque des revendications 1 ou 2, **caractérisé en ce que** chaque activité (ACT1..ACT4) indiquée dans la liste d'activités (AL1..ALn) comporte un indice déterminé (IND) destiné à identifier une activité et **en ce que** la commande de sélection (COM1..COM4) contient l'indice (IND) ou est constitué de celui-ci.

4. Centrale de commande (Z) destinée à commander une pluralité de capteurs (S1..Sn), comprenant une interface (INTZ) destinée à envoyer une première liste d'activités (AL1) à un premier capteur 25 (S1) et au moins une seconde liste d'activités (AL2) à un second capteur (S2) lors d'une étape d'initialisation, **caractérisée en ce que** pour l'envoi d'une commande de sélection (COM1..COM4) au premier et à l'au moins un second capteur (S1, S2), dans lequel la commande de sélection (COM1..COM4) provoque l'exécution d'une première activité (ACT1..ACT4) sélectionnée à partir de la première liste d'activités (AL1) dans le premier capteur (S1) et d'une seconde activité (ACT1..ACT4) sélectionnée à partir de l'au moins seconde liste d'activités (AL2) dans l'au moins un second capteur (S2).

5. Capteur (S1..Sn) comprenant une interface (INT1..INTn) destinée à recevoir une liste d'activités (AL1..ALn), dans lequel l'interface (INT1..INTn) connecte les capteurs (Sl..Sn) à un système de bus, et une commande de sélection (COM1..COM4), une mémoire (MEM1..MEMn) destinée à stocker les listes d'activité (AL1..ALn),
**caractérisé en ce qu'**il est prévu un moyen destiné à exécuter une activité (ACT1..ACT4) sélectionnée au moyen d'une commande de sélection reçue (COM1..COM4) à partir des listes d'activités (AL1..ALn).

6. Système de capteur comprenant une centrale de commande (Z) selon la revendication 4, et une pluralité de capteurs (S1...Sn) selon la revendication 5 qui y sont connectés.
